# EUROPEAN PATENT SPECIFICATION

(11) **EP 4 238 377 B1**
(45) Date of publication and mention of the grant of the patent: **11.11.2026**
(21) Application number: 21932271.6
(22) Date of filing: 26.03.2021
(51) Int. Cl.: H04W 24/10, H04L 5/00

(54) **SYSTEMS AND METHODS FOR REPORTING MULTIPLE MEASUREMENT REPORTS**
SYSTEME UND VERFAHREN ZUR MELDUNG MEHRERER MESSBERICHTE
SYSTÈMES ET PROCÉDÉS POUR RAPPORTER DE MULTIPLES RAPPORTS DE MESURE

(43) Date of publication of application: 06.09.2023
(73) Proprietor: ZTE Corporation, Shenzhen, Guangdong 518057 (CN)
(72) Inventor: ZHENG, Guozeng, Shenzhen, Guangdong 518057 (CN); JIANG, Chuangxin, Shenzhen, Guangdong 518057 (CN); WU, Hao, Shenzhen, Guangdong 518057 (CN); PAN, Yu, Shenzhen, Guangdong 518057 (CN); GAO, Bo, Shenzhen, Guangdong 518057 (CN); LU, Zhaohua, Shenzhen, Guangdong 518057 (CN)
(74) Representative: Vossius & Partner Patentanwälte Rechtsanwälte mbB
(86) International application number: PCT/CN2021/083325
(87) International publication number: WO 2022/198649

(56) References cited:
- WO-A1-2020/231307
- CN-A- 109 391 996
- US-A1- 2007 002 806
- US-A1- 2019 335 477
- MODERATOR (CATT): "FL Summary #2 for accuracy improvements by mitigating UE Rx/Tx and/or gNB Rx/Tx timing delays", vol. RAN WG1, no. e-meeting; 20210125 - 20210205, 2 February 2021 (2021-02-02), XP051976022, Retrieved from the Internet <URL:https://ftp.3gpp.org/tsg_ran/WG1_RL1/TSGR1_104-e/Docs/R1-2101951.zip R1-2101951 #2 FL Summary for mitigating RxTx timing delays.docx> [retrieved on 20210202]
- ERICSSON: "Summary of RAT dependent positioning methods in 7.2.10.3 at RAN1#95", 3GPP TSG-RAN WG1 #95 R1-1814005, 16 November 2018 (2018-11-16), XP051494447

## Description

### TECHNICAL FIELD

The disclosure relates generally to wireless communications and, more particularly, to systems and methods for reporting information of reference signals.

### BACKGROUND

Although the current positioning system in 5G NR system can support multiple measurement values with associated time stamps in a measurement report, for a periodic measurement report based on periodic Reference Signals (RS), there may be multiple occasions/instances of RS to be measured between two consecutive occasions of the measurement report. For a measurement value reported based on the current design, the measurement value may be an average value from several measurement results based on the same RS in different occasions/instances and/or different RS. As such, in the current design, the average operation is up to the receiver's implementation, and the Location Management Function is missing a large amount of information regarding the time occasions and measurement results. In addition, even for the same RS in different occasions/instances, the measurement results could be quite different due to the clock drift of the device, blockage, movement of the UE, or other impairments. MODERATOR (CATT): "FL Summary #2 for accuracy improvements by mitigating UE Rx/Tx and/or gNB Rx/Tx timing delays" (3GPP DRAFT R1-2101951) is related prior art.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The example embodiments disclosed herein are directed to solving the issues relating to one or more of the problems presented in the prior art, as well as providing additional features that will become readily apparent by reference to the following detailed description when taken in conjunction with the accompany drawings. **In** accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

**In** some arrangements, User Equipment (UE) or Base Station (BS) performs a method including reporting a measurement report for positioning to Location Management Function, wherein the measurement report includes a plurality of measurement instances, each of which is associated with a respective time stamp and includes one or more time-domain occasions.

**In** other arrangements, Location Management Function performs a method including sending, to UE or BS, a message requesting the wireless communication device to transmit a measurement report for positioning, wherein the measurement report includes a plurality of measurement instances, each of which is associated with a respective time stamp and includes one or more time-domain occasions.

**In** other embodiments, a wireless communications apparatus comprising a processor and a memory, wherein the processor is configured to read code from the memory and implement a method including reporting a measurement report for positioning, wherein the measurement report includes a plurality of measurement instances, each of which is associated with a respective time stamp and includes one or more time-domain occasions.

In other embodiments, a computer program product comprising a computer-readable program medium code stored thereupon, the code, when executed by a processor, causing the processor to implement a method including reporting a measurement report for positioning, wherein the measurement report includes a plurality of measurement instances, each of which is associated with a respective time stamp and includes one or more time-domain occasions.

The above and other aspects and their implementations are described in greater detail in the drawings, the descriptions, and the claims.

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
FIG. 1 is a plot of showing a measurement report in two consecutive occasions over time, according to an exemplary embodiment.
FIG. 2 is a plot showing a measurement report, according to an exemplary embodiment.
FIG. 3 is a chart illustrating an association for a measurement report, according to an exemplary embodiment.
FIG. 4 is a chart illustrating an association for a measurement report, according to an exemplary embodiment.
FIG. 5 is a chart illustrating an association for a measurement report, according to an exemplary embodiment.
FIG. 6 is a chart illustrating an association for a measurement report, according to an exemplary embodiment.
FIG. 7 is a chart illustrating an association for a measurement report, according to an exemplary embodiment.
FIG. 8 is a chart illustrating an association for a measurement report, according to an exemplary embodiment.
FIG. 9 is a table showing values of reference signal received power associated with measurement instances, according to an exemplary embodiment.
FIG. 10 is a schematic of an interaction between user equipment and a transmission and reception point, according to an exemplary embodiment.
FIG. 11 is a plot of antenna patterns transmitting two reference signals, according to an exemplary embodiment.
FIG. 12A is a flowchart diagram illustrating an example wireless communication method for reporting information for reference signals, according to various embodiments.
FIG. 12B is a flowchart diagram illustrating another example wireless communication method for reporting information for reference signals, according to various embodiments.
FIG. 13A illustrates a block diagram of an example Location Management Function, according to various embodiments.
FIG. 13B illustrates a block diagram of an example device, according to various embodiments.

### DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

In current 5G New Radio (NR) systems, the protocol supports Uplink (UL)-based positioning solutions (e.g., UL-Enhanced Cell ID (ECID) positioning method, UL-Angle of Arrival (AOA) positioning method, UL-Time Difference of Arrival (TDOA) positioning method), Downlink (DL)-based positioning solutions (e.g., DL-ECID positioning method, DL-Angle of Departure (AOD) positioning method, DL-TDOA positioning method), and DL+UL-based positioning solution (i.e., Multi-cell Round Trip Time (Multi-RTT)). For UL measurement at Transmission and Reception Point (TRP)/NR Node B(gNB) side, UL Reference Signals (RS) (e.g., Sounding Reference Signal (SRS)) are detected for acquiring different UL measurement types: a) UL SRS-Reference Signal Received Power (RSRP); b) UL-AOA; c) UL-Relative Time of Arrival (RTOA); and d) gNB Time Difference (i.e., Rₓ-Tₓ). For DL measurement at the User Equipment (UE) side, DL RS (e.g., DL Positioning Reference Signal (PRS)) are measured for acquiring different DL measurement types: a) DL PRS-Reference Signal Received Power (RSRP), which may be reported in DL measurement report for DL-AOD, DL-RSTD, or Multi-RTT positioning methods; b) DL-Reference Signal Time Difference (RSTD), which can only be reported in a DL measurement report for DL-RSTD positioning method; and c) UE Time Difference, which can only be reported in DL measurement report for Multi-RTT positioning method.

UL measurement report-related procedures are defined in NRPPa protocol. The UL measurement report is requested by Location Management Function (LMF) to TRP/gNB, which specifically requests one of the above UL measurement types. The request signaling may also include SRS configuration for use in the UL measurement report. The SRS can be periodic SRS, semi-persistent SRS, and aperiodic SRS. The TRP/gNB then measures RS and reports the UL measurement report as indicated by LMF. In a UL measurement report, multiple UL measurement values may be reported for the same UL measurement type. For example, in UL-TDOA positioning method, there may be multiple UL-RTOA values to be reported. In addition, each UL measurement value is associated with a time stamp, which is the time instance for which the measurement is performed. The time stamp includes a System Frame Number (SFN), slot index, and (optionally) SFN initialization time.

The DL measurement report-related procedures are defined in LPP protocol. LMF provides assistance data to UE, which includes DL PRS configuration for the UE to measure. The framework of DL PRS is generally: 1) the LMF will configure some positioning frequency layer(s), which is a collection of DL PRS Resource Sets across one or more TRPs that have the same Sub-Carrier Spacing (SCS), Cyclic Prefix (CP), center frequency, reference frequency, configured Bandwidth (BW), and comb size. The positioning frequency layer is identified by positioning frequency layer ID; 2) one or more TRPs are configured under each positioning frequency layer, which is identified by TRP ID information; 3) one or more DL PRS Resource Sets are configured under each TRP, which is identified by DL PRS Resource Set ID; and 4) one or more DL PRS Resources are configured within a DL PRS Resource Set, which is identified by DL PRS Resource ID.

From there, the DL measurement report is requested by LMF to UE and indicates which positioning method is required to report. In addition, the signaling may also include: a) whether the UE is requested to report DL-PRS Resource ID(s) or DL-PRS Resource Set ID(s) used for determining the measurement value; b) whether the DL PRS-RSRP is requested to report for Multi-RTT positioning method or DL-TDOA positioning method; c) maximum number of measurement values of UE Time Difference per TRP for Multi-RTT positioning method; d) maximum number of measurement values of DL-RSTD per TRP for DL-AOD positioning method; or e) maximum number of measurement values of DL-RSTD per TRP pair for DL-TDOA positioning method.

The UE measures RS and reports the DL measurement report as indicated by LMF. In a DL measurement report, multiple DL measurement values may be reported for the same UL measurement type. For example, in DL-TDOA positioning method, there may be multiple DL-RSTD values to be reported. In addition, each DL measurement value is associated with a time stamp, which is the time instance for which the measurement is performed. The time stamp at least includes SFN and slot index.

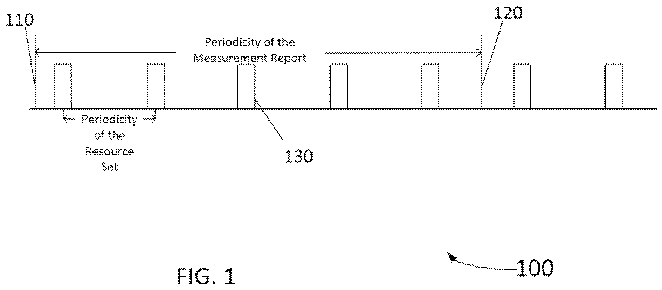

As described above, the current positioning system in 5G NR system can support multiple measurement values with associated time stamps in a measurement report. However, for a periodic measurement report based on periodic RS, there may be multiple occasions/instances of RS to be measured between two consecutive occasions of the measurement report. FIG. 1 is a plot 100 of showing a measurement report in two consecutive occasions over time, according to an exemplary embodiment. As shown in FIG. 1, the time duration between a first occasion of a measurement report 110 and a second occasion of the measurement report 120 defines a periodicity of the measurement report. Within that periodicity are multiple occasions/instances of a RS Resource Set 130. For a measurement value reported in a measurement report based on the current design, the measurement value may be an average value from several measurement results based on the same RS in different occasions/instances and/or different RS.

As such, in the current design, the average operation is up to the receiver's implementation, and the LMF does not know the following: a) the number of measurement results used to derive a measurement value; b) the number of occasions/instances of the RS used to derive a measurement value; and c) the associated time stamp corresponding to which occasion/instance of the RS. In addition, even for the same RS in different occasions/instances, the measurement results could be quite different due to the clock drift of the device, blockage, movement of the UE, or other impairments. Therefore, it is preferred that the average operation be not fully transparent to LMF. Furthermore, the measurement report should be able to track the changes induced by the impairments mentioned before.

To address these shortcomings in the current design, the systems and methods described herein provide a way to report multiple measurement instances in a measurement report (especially positioning measurement report). Each measurement instance contains measurement information, with measurement information from different measurement instances are acquired at different times. While one way of reporting multiple measurement instances in a measurement report has been previously described, the description there fails to address: a) what signaling is required to indicate to a device to send a measurement report with multiple measurement instances; b) how to feed back a measurement report with multiple measurement instances; and c) how to define a device's capabilities when multiple measurement instances in a measurement report are allowed.

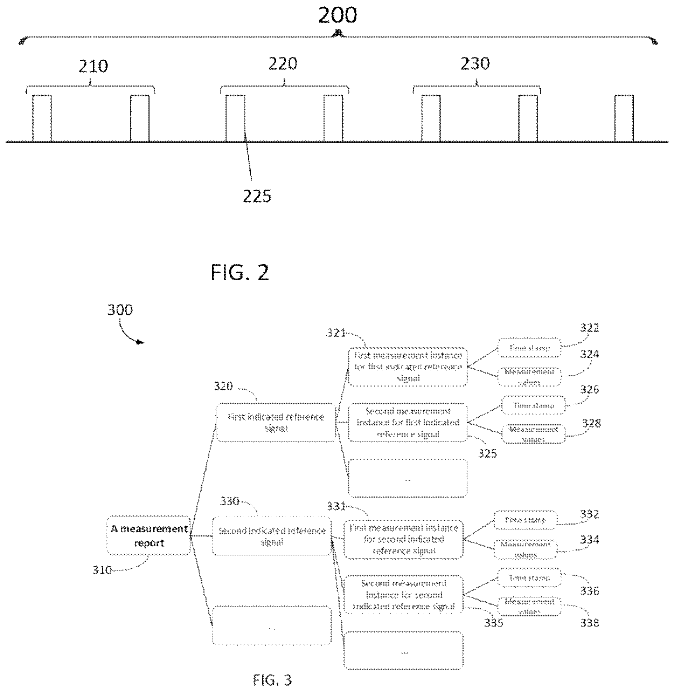

FIG. 2 is a plot showing a measurement report 200, according to an exemplary embodiment. As shown in FIG. 2, the measurement report 200 consists of multiple measurement instances, including a first measurement instance 210, a second measurement instance 220, and a third measurement instance 230. Each measurement instance 210-230 is associated with multiple occasions/instances of the RS. For example, the second measurement instance 220 is shown to include two occasions/instances of a RS resource set 225. All measurement information in a measurement instance is based on the RS in some associated occasions/instances of RS(s).

For the systems and methods described herein, the following assumptions are made: a) the periodicity of a measurement report is denoted by *Tᵣₑₚₒᵣₜ*; and b) the periodicity of a reference signal resource set is denoted by *T_{i, j, k}*; where *i* is the index of TRP ID, *j* is the index of the resource set ID in a TRP, and *k* indicates to which positioning frequency layer the resource set belongs. Furthermore, the systems and methods described herein are applicable to both DL and UL measurement, such that the term 'device' can refer to a terminal/UE, where the measurement report is used for DL measurement, or BS (e.g. gNB/TRP), where the measurement report is used for UL measurement.

In a first example, the measurement report is to include a plurality of reference signals, and each of the indicated reference signals is uniquely identified in a measurement report by at least one of a TRP ID, a resource set ID, and a resource ID. Furthermore, each of the indicated reference signals is associated with P measurement instances. Each measurement instance may include one or more measurement values of the same or different measurement type. Multiple measurement values of different measurement types can be determined from the indicated RS. For example, the value of DL PRS-RSRP and DL-RSTD are based on the same DL PRS resource. Each measurement value is based on Q occasions/instances of the indicated RS and is associated with a time stamp, which indicates the time when the measurement values in the measurement instance are acquired. Further, each measurement value is identified by a measurement instance ID, which may be locally defined within the corresponding indicated RS.

FIG. 3 is a chart 300 illustrating an association for a measurement report, according to the first example. As shown in FIG. 3, the measurement report 310 includes a first indicated RS 320 and a second indicated RS 330. The first indicated RS 320 includes a first measurement instance for the first indicated RS 321 and a second measurement instance for the first indicated RS 325. Each of the measurement instances 321/325 include a time stamp 322/326 and measurement values 326/328. The second indicated RS 330 includes a first measurement instance for the second indicated RS 331 and a second measurement instance for the second indicated RS 335. Each of the measurement instances 331/335 include a time stamp 332/336 and one or more measurement values 336/338.

In a second example, a plurality of measurement elements are indicated to be included in the measurement report, and each of the indicated measurement elements is indicated through a TRP ID. Furthermore, each of the indicated measurement elements can be associated with P measurement instances. Each measurement instance may include one or more measurement values of the same or different measurement types. Multiple measurement values of different measurement types can be determined from the same RS. For example, the value of DL PRS-RSRP and DL-RSTD are based on the same DL PRS resource. Each measurement value may be associated with reference signal information (i.e., the measurement value may be uniquely identified by a TRP ID, a resource set ID, and (optionally) a resource ID) for determining the measurement value, is based on measurement results from Q occasions/instances of the associated RS, and is associated with a time stamp that indicates the time when the measurement values in the measurement instance is acquired. Further, each measurement instance is identified by a measurement instance ID, which may be locally defined within the corresponding measurement element.

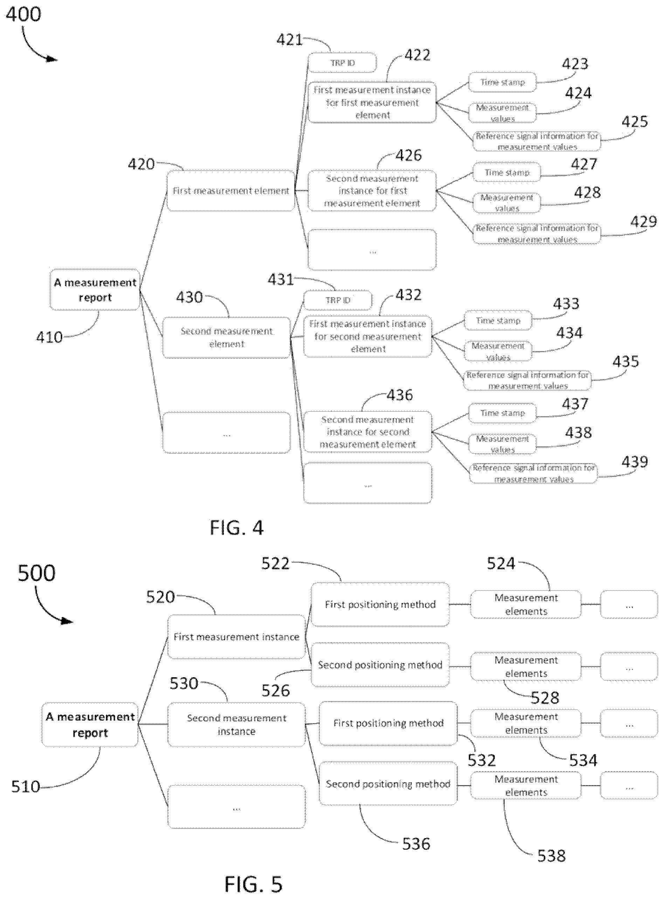

FIG. 4 is a chart 400 illustrating an association for a measurement report, according to the second example. As shown in Fig. 4, a measurement report 410 includes a first measurement element 420 and a second measurement element 430. The first measurement element 420 includes a TRP ID 421, a first measurement instance for the first measurement element 422, and a second measurement instance for the first measurement element 426. Each of the measurement instances 422/426 includes a time stamp 423/427, one or more measurement values 424/428, and RS information for corresponding measurement values 425/429. The second measurement element 430 includes a TRP ID 431, a first measurement instance for the second measurement element 432, and a second measurement instance for the second measurement element 436. Each of the measurement instances 432/436 includes a time stamp 433/437, measurement values 434/438, and RS information for measurement values 435/439.

In a third example, one or more positioning methods may be associated with one of the measurement instances in the measurement report, and each positioning method may include one or more measurement elements (each measurement element is uniquely identified by a TRP ID). Each measurement element may include measurement values of the same or different measurement type, and multiple measurement values of different measurement types can be determined from the same RS (e.g., the value of DL PRS-RSRP and DL-RSTD are based on the same DL PRS resource). Each measurement value may further be associated with reference signal information (i.e., the measurement value may be uniquely identified by a TRP ID, a resource set ID, and (optionally) a resource ID) for determining the measurement value, and is based on measurement results from Q occasions/instances of the associated RS. Each measurement instance is identified by a measurement instance ID. Further, each measurement instance is associated with a time stamp that indicates the time when the measurement values in the measurement instance is acquired.

FIG. 5 is a chart 500 illustrating an association for a measurement report, according to the third example. As shown in Fig. 5, a measurement report 510 includes a first measurement instance 520 and a second measurement instance 530. The first measurement instance includes a first positioning method 522 and a second positioning method 526. Each of the positioning methods 522/526 include measurement elements 524/528. The second measurement instance includes a first positioning method 532 and a second positioning method 536. Each of the positioning methods 532/536 include measurement elements 534/538. The information that each measurement element may include is described above with reference to the third example.

In a fourth example, a measurement report is associated with P measurement instances. One or more measurement elements are indicated to be associated with one of the measurement instances. Each measurement element is uniquely identified by a TRP ID. Each measurement element may include measurement values of the same or different measurement types, and multiple measurement values of different measurement types can be determined from the same RS (e.g., the value of DL PRS-RSRP and DL-RSTD are based on the same DL PRS resource). Each measurement value may further be associated with reference signal information (i.e., the measurement value may be uniquely identified by a TRP ID, a resource set ID, and (optionally) a resource ID) for determining the measurement value, and is based on measurement results from Q occasions/instances of the associated RS. Each measurement instance is identified by a measurement instance ID and is associated with a time stamp that indicates the time when the measurement values in the measurement instance is acquired.

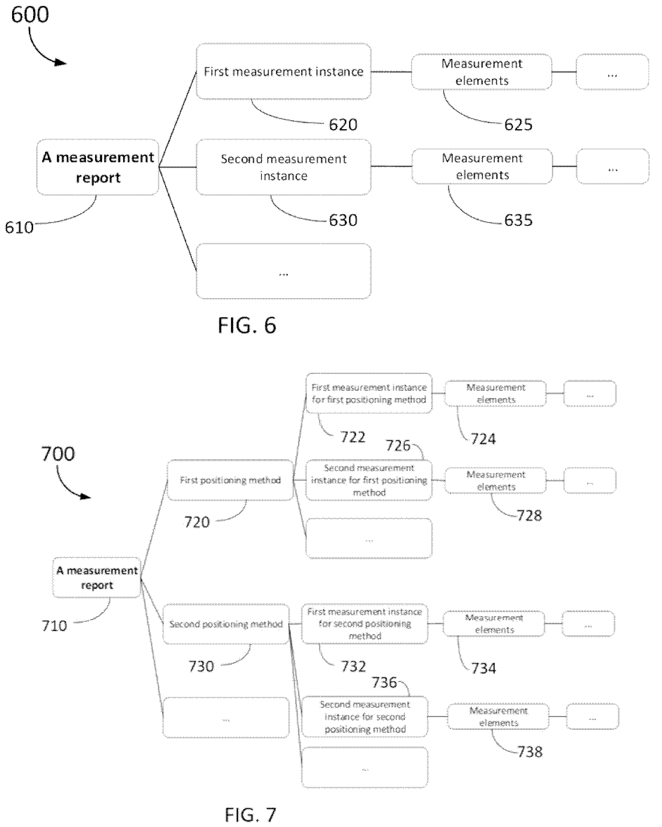

FIG. 6 is a chart 600 illustrating an association for a measurement report, according to the fourth example. As shown in Fig. 6, a measurement report 610 includes a first measurement instance 620 and a second measurement instance 630. Each of the measurement instances 620/630 include measurement elements 625/635. The information that each measurement element may include is described above with reference to the fourth example.

In a fifth example, a measurement report includes a plurality of positioning methods, and each positioning method can be associated with P measurement instances. Each measurement instances may include one or more measurement elements, and each measurement element is uniquely identified by a TRP ID.). Each measurement element may include measurement values of the same or different measurement types. These multiple measurement values of different measurement types can be determined from the same RS (e.g., the value of DL PRS-RSRP and RL-RSTD are based on the same DL PRS resource). Each measurement value may further be associated with reference signal information (i.e., the measurement value may be uniquely identified by a TRP ID, a resource set ID, and (optionally) a resource ID) for determining the measurement value, and each measurement value is based on measurement results from Q occasions/instances of the associated RS. Furthermore, each measurement instance is associated with a time stamp, which indicates the time at which the measurement values in the measurement instance are acquired. Each measurement instance is identified by a measurement instance ID that may be locally defined within the corresponding positioning method.

FIG. 7 is a chart 700 illustrating an association for a measurement report, according to the fifth example. As shown in FIG. 7, a measurement report 710 includes a first positioning method 720 and a second positioning method 730. The first positioning method includes a first measurement instance 722 and a second measurement instance 726, each of which include measurement elements 724/728. The second positioning method includes a first measurement instance 732 and a second measurement instance 736, each of which include measurement elements 734/738. The information that each measurement element may include is described above with reference to the fifth example.

In a sixth example, the measurement report includes a plurality of resource sets, and each resource set may be uniquely identified by a TRP ID and a resource set ID. Each resource set can be associated with P measurement instances. Each measurement instance may include one or more measurement values of the same or different measurement types, with multiple measurement values of different measurement types being determined from the indicated RS (e.g., the value of DL PRS-RSRP and DL-RSTD are based on the same DL PRS resource). Each measurement value is based on measurement results from Q occasions/instances of the associated RS, and is optionally associated with a resource ID within the indicated RS resource set for determining the measurement value. Each measurement instance is associated with a time stamp, which indicates the time at which the measurement values in the measurement instance are acquired. Each measurement instance is identified by a measurement instance ID that may be locally defined within the corresponding indicated RS resource set.

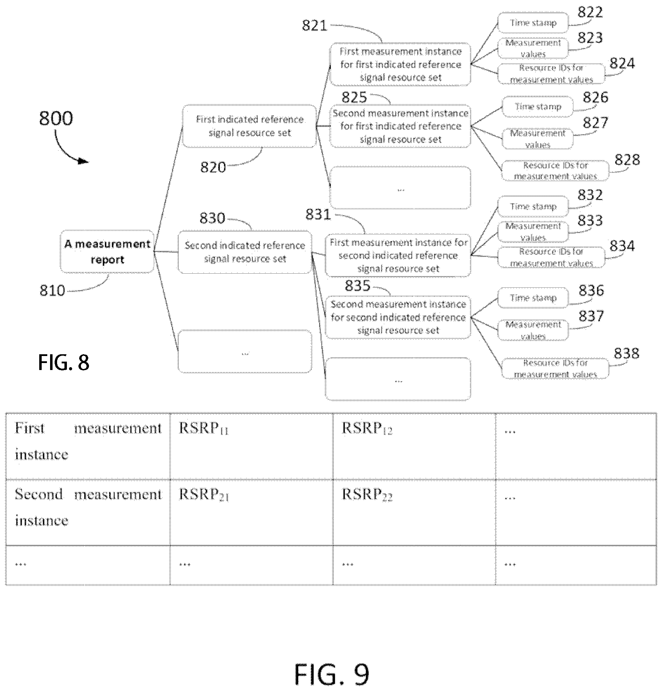

FIG. 8 is a chart 800 illustrating an association for a measurement report, according to the sixth example. As shown in FIG. 8, a measurement report 810 includes a first indicated RS resource set 820 and a second indicated RS resource set 830. The first indicated RS resource set 820 includes a first measurement instance 821 and a second measurement instance 825, each of which include a time stamp 822/826, measurement values 823/827, and resource IDs for measurement values 824/828. The second indicated RS resource set 830 includes a first measurement instance 831 and a second measurement instance 835, each of which include a time stamp 832/836, measurement values 833/837, and resource IDs for measurement values 834/838.

The time stamp can be defined in one of two ways: 1) as a time window bounded by a a first/starting time stamp (e.g. at least include SFN and slot index) that corresponds to a reception time of a first reference signal for determining one of the measurement instances and a second/ending time stamp (e.g. at least include SFN and slot index) that corresponds to a reception time of a last reference signal for determining the measurement instance; or 2) as a time window defined by a first/starting time stamp (e.g. at least include SFN and slot index) that corresponds to a reception time of a first reference signal for determining one of the measurement instances and duration of the time window (e.g. at least include SFN number and slot number) for the measurement instance, which can be configured by LMF or reported by device. All RS used for the measurement instance are within the time window indicated in corresponding time stamp.

The value of *Q* can be determined in one of three ways. In a first way, the value of *Q* is configured by LMF per resource set. The value is based on each resource set, as each resource set has their respective *Q* value. The device will determine the corresponding value of *Q* based on the resource set when performing measurement. The value may be dependent on the periodicity of the measurement report and the periodicity of the associated reference signal resource set, e.g. the value may not be expected to be larger than $\left⌊\frac{{T}_{report}}{{T}_{i , j , k}}\right⌋$ where *T_{i, j, k}* is the periodicity of the resource set to which the indicated RS belongs. In a second way, the value of Q is configured by LMF per TRP. The value is based on each TRP, as each TRP has their respective *Q* value. The device will determine the corresponding value of *Q* based on the TRP to which the resource set associated when performing measurement, and all resource sets associated the same TRP share the same value of *Q.* The value may be dependent on the periodicity of the measurement report and the periodicities of reference signal resource sets associated with a TRP, e.g. the value is not expected to be larger than $\left⌊\frac{{T}_{report}}{{T}_{i , min}}\right⌋$ where *T_{i, min}* is the minimum periodicity of all resource sets associated with the *i*^{th} TRP. In a third way, the value of *Q* is configured by LMF per positioning frequency layer. The value is based on each positioning frequency layer, as each positioning frequency layer has their respective Q value. The device will determine the corresponding value of Q based on the positioning frequency layer to which the resource set associated when performing measurement, and all resource sets belong to the same positioning frequency layer share the same value of *Q.* The value may be dependent on at least one of the periodicity of the measurement report and the periodicities of reference signal resource sets associated with a positioning frequency layer , e.g. the value may not be expected to be larger than $\left⌊\frac{{T}_{report}}{{T}_{k , min}}\right⌋$ where *T_{k, min}* is the minimum periodicity of all resource sets associated with the *k*^{th} positioning frequency layer. In each of the different ways for determining the value of *Q,* the value of P can be: 1) configured by LMF per resource set (i.e. the value is based on each resource set, as each resource set has their respective P value), which means the number of measurement instances associated with a resource/resource set is determined by the P value configured in corresponding resource set; 2) configured by LMF per TRP (i.e. the value is based on each TRP, as each TRP has their respective *P* value), which means the number of measurement instances associated with a measurement element/resource/resource set is determined by the *P* value configured in corresponding TRP); 3) configured by LMF per positioning frequency layer (i.e. the value is based on each positioning frequency layer, as each positioning frequency layer has their respective *P* value), which means the number of measurement instances associated with a measurement report/positioning frequency layer/measurement element/resource/resource set is determined by the P value configured in corresponding positioning frequency layer) ; 4) configured by LMF as a value *P*ₘₐₓ, which means the number of measurement instances associated with a measurement report/positioning frequency layer/measurement element/resource/resource set is not expected to larger than *P*ₘₐₓ; 5) the number of measurement instances associated with a resource/resource set is dependent on at least one of the periodicity of the measurement report, the periodicity of the associated reference **signal** resource set and the value of Q configured in the reference signal resource set, e.g., which is not larger than $\left⌊\frac{\left⌊{T}_{report}/{T}_{i , j , k}\right⌋}{Q}\right⌋$; 6) the number of measurement instances associated with a measurement element/ resource/resource set is dependent on at least one of the periodicity of the measurement report, the periodicities of reference signal resource sets associated with a TRP and the value of Q configured in the TRP, e.g., which is not larger than $\left⌊\frac{\left⌊{T}_{report}/{T}_{i , min}\right⌋}{Q}\right⌋$; 7) the number of measurement instances associated with a measurement report/positioning frequency layer/measurement element/resource/resource set is dependent on at least one of the periodicity of the measurement report, the periodicities of reference signal resource sets associated with a positioning frequency layer and the value of Q configured in the positioning frequency layer, e.g., which is not larger than $\left⌊\frac{\left⌊{T}_{report}/{T}_{k , min}\right⌋}{Q}\right⌋$; or 8) configured by LMF as a single value per measurement report, which means the number of measurement instances associated with a measurement report/positioning frequency layer/measurement element/resource/resource set is not larger than the single value P.

In order that the configuration of the measurement report does not exceed the device's capabilities (to the extent possible), the device's capabilities are provided to the LMF. These capabilities at least include one of: a) the max number of measurement instances per measurement report; b) the max number of measurement instances associated with a resource set in a measurement report; c) the max number of measurement instances associated with a TRP (or measurement element) in a measurement report; d) max number of measurement instances associated with a positioning frequency layer in a measurement report; e) what positioning methods are supported/included in a measurement instance; and f) what measurement types are supported/included in a measurement instance.

In an embodiment, as discussed herein, the DL-RSTD value is a relative timing difference determined by a TRP and a reference TRP. For a DL-RSTD value, it should be clear what reference timing (i.e., determined by reference TRP) is used to determine the DL-RSTD value. Therefore, at least one of the following should be indicated in a measurement report for determining the reference timing of a DL-RSTD value: a) TRP ID; b) resource set ID; c) resource ID; or d) measurement instance ID.

In an embodiment, the measurement values can be reported by the values relative to the measurement value in the first measurement instance (e.g. the measurement instance ID =1). For example, a RSRP value in the first measurement instance is RSRP₁, such that the RSRP(s) of indicated RS(s) in other measurement instances are reported with differential values relative to RSRP₁. In another example, a DL-RSTD value in the first measurement instance is DL-RSTD₁, and a DL-RSTD value in the other measurement instance is DL-RSTD₂. The DL-RSTD₂ is then reported relative to DL-RSTD₁ (i.e., (DL-RSTD₂)-(DL-RSTD₁)).

In an embodiment, the associated reference signal information for determining measurement value is not required to be included in some measurement instances. Two measurement values in different measurement instances reported in the same order are associated with the same reference signal information. For example, the reporting/mapping order of two measurement values in the first measurement instance is RSRP₁₁ followed by RSRP₁₂, and the reporting/mapping order of two measurement values in the second measurement instance is RSRP₂₁ followed by RSRP₂₂. FIG. 9 is a table showing RSRPs associated with measurement instances, according to an exemplary embodiment. As shown in FIG. 9, RSRP₁₁ and RSRP₂₁ are associated with the same reference signal information, and RSRP₁₂ and RSRP₂₂ are associated with the same reference signal information.

In an embodiment, the device is not expected to be configured to send a measurement report with multiple measurement instances when the associated RS in a measurement report is aperiodic RS (e.g., triggered by Downlink Control Information (DCI)) or semi-persistent RS (e.g., activated by Medium Access Control - Control Element (MAC-CE)). The device is not expected to be configured to send an on-demand measurement report (i.e., the report is only required to be reported one time) with multiple measurement instances, nor is the device expected to be configured to send a measurement report with multiple measurement instances when the device is in RRC-Inactive state.

In some embodiments in which the measurement instance is based on Q occasions/instances of the associated RS, the *Q* occasions/instances are *Q* consecutive occasions/instances of a periodic RS. For a periodic DL PRS resource set, some of the occasions/instances may be muted based on current design, and the device does not measure the muted occasions/instances. Therefore, Q consecutive occasions/instances would not include any muted occasions/instances. Furthermore, the DL PRS is only measured inside measurement gaps based on the current design, so Q consecutive occasions do not count occasions/instances outside the measurement gaps.

Before the device has a chance to send a measurement report, the device buffers multiple measurement instances. In some instances, the buffered measurement instances may be larger than the device is able to (based on the device's capabilities) report in a single measurement report. In these instances, the LMF may provide instructions for one of: a) intermediate reporting, where the device sends an intermediate report earlier than requested; b) discarding oldest, where the device discards the oldest measurement instance when the buffered measurement instances exceed the device's capability; or c) discarding latest, where the device discards the latest (i.e., most recent) measurement instance when the buffered measurement instance exceeds the device's capability.

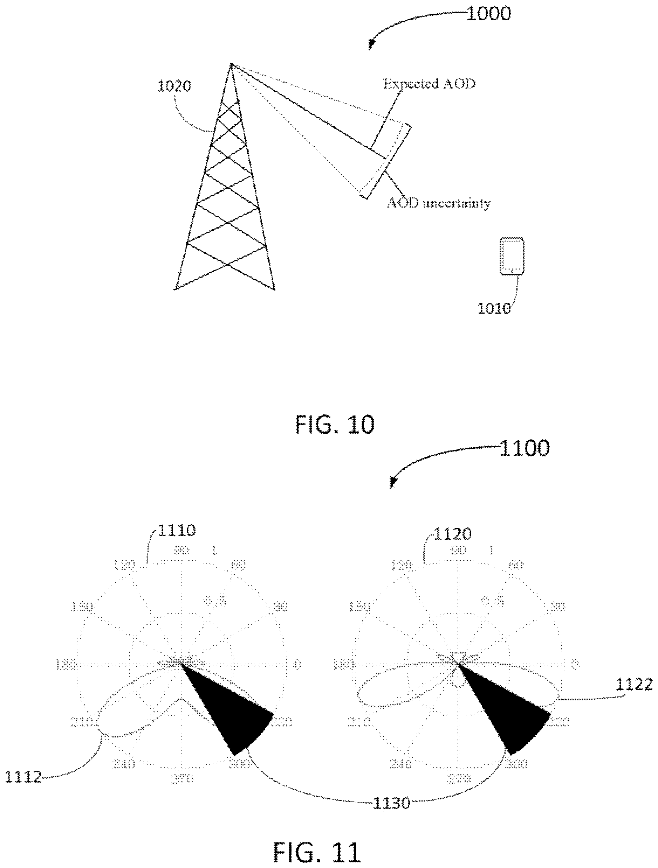

When the DL-AOD positioning method is utilized, LMF may provide a range of AOD to UE in order to improve the performance of the positioning method by enabling the UE to better know the UE's direction relative to a gNB/TRP. FIG. 10 is a schematic 1000 of an interaction between UE 1010 and gNB/TRP 1020. As shown in FIG. 10, based on information regarding a prior position of UE 1010, the LMF can provide a range of AOD to UE 1010. This range of AOD is defined as the expected AOD, which indicates an AOD value (i.e., at least one of the azimuth angle or zenith angle) that the UE is expected to be located relative to gNB/TRP, and the AOD uncertainty, which is the uncertainty (i.e., variation) of possible AODs (i.e., at least one of uncertainty of azimuth angle or zenith angle). This range of AOD can be provided either per TRP, where different TRPs are associated with different values of expected AOD and AOD uncertainty, or by association with RS, where all RS (e.g., DL PRS resource) transmitted from the same coordinate are associated with the same values of expected AOD and AOD uncertainty.

Furthermore, for better positioning, LMF can also provide UE with the antenna pattern (or antenna gain/beam response) information when transmitting reference resources. Each RS is associated with an antenna pattern. The antenna information does not need to include gains from all directions because antenna pattern information only includes the gains in the range provided by expected AOD and AOD uncertainty. FIG. 11 is a plot 1100 of antenna patterns transmitting two RS. As shown in a FIG. 11, a first antenna pattern 1110 is shown to be transmitting a first reference signal 1112 and a second antenna pattern 1120 is shown to be transmitting a second reference signal 1122. Both the RS 1112 and 1122 share the same values for expected AOD and AOD uncertainty, shown in FIG. 11 as AOD range 1130. As such, antenna pattern information provided to UE can only include the gains in the overlap of the shaded area of AOD range 1130 with the first reference signal 1112 and the second reference signal 1122.

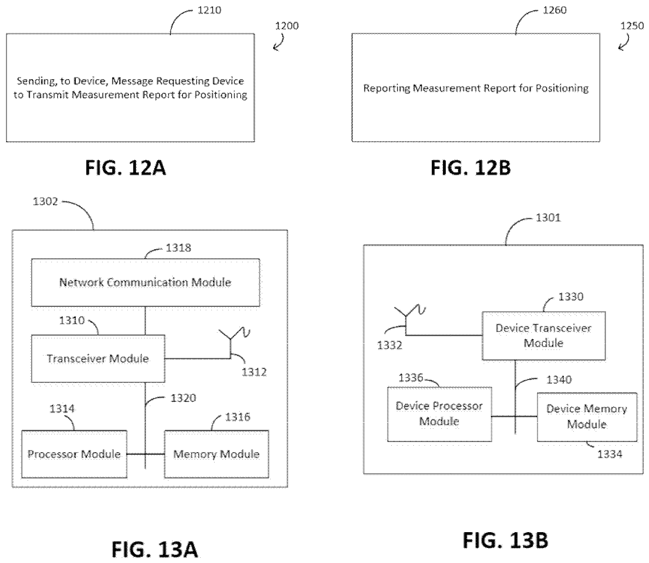

FIG. 12A is a flowchart diagram illustrating an example wireless communication method 1200, according to various arrangements. Method 1200 can be performed by a Location Management Function (LMF), and begins at 1210 where the LMF sends, to a wireless communication device (i.e., a BS or UE), a message requesting the wireless communication device to transmit a measurement report for positioning. The measurement report includes a plurality of measurement instances, each of which is associated with a respective time stamp and includes one or more time-domain occasions. The measurement report is for Uplink (UL) positioning if the LMF is sending to a UE and is for Downlink (DL) positioning if the LMF is sending to a BS.

According to the invention, each time-domain occasion corresponds to when the UE receives a single instance of a RS resource set. Furthermore, in some embodiments, the time stamp is defined as a time window indicated by a first time stamp that corresponds to a reception time of a first RS for determining one of the measurement instances and a second time stamp that corresponds to a reception time of a last RS for determining the measurement instances. In other embodiments, the time stamp is defined as a time window indicated by a first time stamp that corresponds to a reception time of a first RS for determining one of the measurement instances and a duration for determining the measurement instance.

In some embodiments, the method 1200 further includes determining a number of time-domain occasions or a number of measurement instances based on a single resource set. In other embodiments, the method 1200 further includes determining a number of time occasions or a number of measurement instances based on a single TRP. In further embodiments, the method 1200 further includes determining a number of time-domain occasions or a number of measurement instances based on a single positioning frequency layer.

In some embodiments, the method 1200 further includes indicating a plurality of RS to be included in the measurement, each of which is indicated through at least one of a TRP ID, a resource set ID, and a resource ID, and is associated with a respective subset of the plurality of measurement instances. In some of these embodiments, each of the measurement instances further includes one or more measurement values of the same measurement type or different measurement types.

In some embodiments, the method 1200 further includes indicating a plurality of measurement elements to be included in the measurement report, each of which is indicated through a TRP ID and is associated with a respective subset of the plurality of measurement instances. In some of these embodiments, each of the measurement instances further includes one or more measurement values of the same measurement type or different measurement types, and is associated with RS information for determining the measurement value.

According to the invention, the method 1200 further includes indicating one or more positioning methods to be associated with one of the measurement instances in the measurement report. Each positioning method includes one or more measurement elements, each of which is indicated through a TRP ID and includes one or more measurement values of the same measurement type or different measurement types. Each measurement value is associated with RS information for determining the measurement value. In other embodiments, the method 1200 further includes indicating one or more measurement elements to be associated with one of the measurement instances in the measurement report. Each measurement element is indicated through a TRP ID and further includes one or more measurement values of the same measurement type or different measurement types, and each measurement value is associated with RS information for determining the measurement value.

In some embodiments, the measurement report includes at least one of a TRP ID, a resource set ID, a resource ID, or a measurement instance ID for determining a reference timing of a DL RSTD value. In other embodiments, a second measurement instance is associated with a second measurement value indicated as value relative to a first measurement value associated with a first measurement instance. In this embodiment, the first and the second measurement values are associated with the same measurement type.

In some embodiments, the measurement report includes RS information only in a first one of the measurement instances. In some of these embodiments, the same RS is associated with the first measurement instance and other ones of the plurality of measurement instances based on a mapping/reporting order.

FIG. 12B is a flowchart diagram illustrating an example wireless communication method 1250, according to various arrangements. Method 1250 can be performed by a BS or UE, and begins at 1260 where a UE (or BS) reports a measurement report for positioning. The measurement report includes a plurality of measurement instances, each of which is associated with a respective time stamp and includes one or more time-domain occasions. The measurement report is for Uplink (UL) positioning if used by the UE and is for Downlink (DL) positioning if used by the BS.

According to the invention, each time-domain occasion corresponds to when the UE receives a single instance of a RS resource set. Furthermore, in some embodiments, the time stamp is defined indicated by a first time stamp that corresponds to a reception time of a first RS for determining one of the measurement instances and a second time stamp that corresponds to a reception time of a last RS for determining the measurement instances. In other embodiments, the time stamp is indicated by a first time stamp that corresponds to a reception time of a first RS for determining one of the measurement instances and a duration for determining the measurement instance.

In some embodiments, the method 1250 further includes a determination of a number of time-domain occasions or a number of measurement instances based on a single resource set. In other embodiments, the method 1250 further includes a determination of a number of time occasions or a number of measurement instances based on a single TRP. In further embodiments, the method 1250 further includes a determination of a number of time-domain occasions or a number of measurement instances based on a single positioning frequency layer.

In some embodiments, the method 1250 further includes an indication of a plurality of RS to be included in the measurement, each of which is indicated through at least one of a TRP ID, a resource set ID, and a resource ID, and is associated with a respective subset of the plurality of measurement instances. In some of these embodiments, each of the measurement instances further includes one or more measurement values of the same measurement type or different measurement types, and a number of the respective subset of the plurality of measurement instances is determined based on at least one of: a) an indicated TRP; b) a value configured by the BS; and c) a value dependent on the periodicity of the measurement report and the periodicities of resource sets associated with the indicated TRP. In other of these embodiments, a number of the respective subset of the plurality of measurement instances is determined based on at least one of: a) a resource set to which each of the indicated RS belongs; b) a TRP with which each of the indicated RS is associated; c) a positioning frequency layer with which each of the indicated RS is associated; d) a value configured by the BS; and e) a value dependent on a periodicity of the measurement report and a periodicity of a resource set to which each of the indicated RS belongs. In further of these embodiments, each of the measurement instances further includes one or more measurement values of the same measurement type or different measurement types, and is associated with RS information for determining the measurement value

In some embodiments, the method 1250 further includes an indication of a plurality of measurement elements to be included in the measurement report, each of which is indicated through a TRP ID and is associated with a respective subset of the plurality of measurement instances.

According to the invention, the method 1250 further includes an indication of one or more positioning methods to be associated with one of the measurement instances in the measurement report. Each positioning method includes one or more measurement elements, each of which is indicated through a TRP ID and further includes one or more measurement values of the same measurement type or different measurement types. Each measurement value is associated with RS information for determining the measurement value.

In other embodiments, the method 1250 further includes an indication of one or more measurement elements to be associated with one of the measurement instances in the measurement report. Each measurement element is indicated through a TRP ID and further includes one or more measurement values of the same measurement type or different measurement types, and each measurement value is associated with RS information for determining the measurement value.

In some embodiments, the measurement report includes at least one of a TRP ID, a resource set ID, a resource ID, or a measurement instance ID for determining a reference timing of a DL RSTD value. In other embodiments, a second measurement instance is associated with a second measurement value indicated as value relative to a first measurement value associated with a first measurement instance. In this embodiment, the first and the second measurement values are associated with the same measurement type.

In some embodiments, the measurement report includes RS information only in a first one of the measurement instances. In some of these embodiments, the same RS is associated with the first measurement instance and other ones of the plurality of measurement instances based on a reporting/mapping order.

FIG. 13A illustrates a block diagram of an example LMF 1302, in accordance with some embodiments of the present disclosure. FIG. 13B illustrates a block diagram of an example device 1301, in accordance with some embodiments of the present disclosure. The device 1301 may be a UE (e.g., a wireless communication device, a terminal, a mobile device, a mobile user, and so on) which is an example implementation of the UEs described herein, or may be a BS, which is an example implementation of the BS described herein.

The LMF 1302 and the device 1301 can include components and elements configured to support known or conventional operating features that need not be described in detail herein. In one illustrative embodiment, the LMF 1302 and the device 1301 can be used to communicate (e.g., transmit and receive) data symbols in a wireless communication environment, as described above. For instance, the LMF 1302 can be a server, a node, or any suitable computing device used to implement various network functions.

The LMF 1302 includes a transceiver module 1310, an antenna 1312, a processor module 1314, a memory module 1316, and a network communication module 1318. The module 1310, 1312, 1314, 1316, and 1318 are operatively coupled to and interconnected with one another via a data communication bus 1320. The device 1301 includes a device transceiver module 1330, a device antenna 1332, a device memory module 1334, and a device processor module 1336. The modules 1330, 1332, 1334, and 1336 are operatively coupled to and interconnected with one another via a data communication bus 1340. The LMF 1302 communicates with the device 1301 or another device via a communication channel, which can be any wireless channel or other medium suitable for transmission of data as described herein.

As would be understood by persons of ordinary skill in the art, the LMF 1302 and the device 1301 can further include any number of modules other than the modules shown in FIGS. 13A and 13B. The various illustrative blocks, modules, circuits, and processing logic described in connection with the embodiments disclosed herein can be implemented in hardware, computer-readable software, firmware, or any practical combination thereof. To illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. The embodiments described herein can be implemented in a suitable manner for each particular application, but any implementation decisions should not be interpreted as limiting the scope of the present disclosure.

In accordance with some embodiments, the device transceiver 1330 includes a radio frequency (RF) transmitter and a RF receiver each including circuitry that is coupled to the antenna 1332. A duplex switch (not shown) may alternatively couple the RF transmitter or receiver to the antenna in time duplex fashion. Similarly, in accordance with some embodiments, the transceiver 1310 includes an RF transmitter and a RF receiver each having circuity that is coupled to the antenna 1312 or the antenna of another BS. A duplex switch may alternatively couple the RF transmitter or receiver to the antenna 1312 in time duplex fashion. The operations of the two-transceiver modules 1310 and 1330 can be coordinated in time such that the receiver circuitry is coupled to the antenna 1332 for reception of transmissions over a wireless transmission link at the same time that the transmitter is coupled to the antenna 1312. In some embodiments, there is close time synchronization with a minimal guard time between changes in duplex direction.

The device transceiver 1330 and the transceiver 1310 are configured to communicate via the wireless data communication link, and cooperate with a suitably configured RF antenna arrangement 1312/1332 that can support a particular wireless communication protocol and modulation scheme. In some illustrative embodiments, the device transceiver 1330 and the transceiver 1310 are configured to support industry standards such as the Long Term Evolution (LTE) and emerging 5G standards, and the like. It is understood, however, that the present disclosure is not necessarily limited in application to a particular standard and associated protocols. Rather, the device transceiver 1330 and the LMF transceiver 1310 may be configured to support alternate, or additional, wireless data communication protocols, including future standards or variations thereof.

The transceiver 1310 and the transceiver of another device (such as but not limited to, the transceiver 1310) are configured to communicate via a wireless data communication link, and cooperate with a suitably configured RF antenna arrangement that can support a particular wireless communication protocol and modulation scheme. In some illustrative embodiments, the transceiver 1310 and the transceiver of another BS are configured to support industry standards such as the LTE and emerging 5G standards, and the like. It is understood, however, that the present disclosure is not necessarily limited in application to a particular standard and associated protocols. Rather, the transceiver 1310 and the transceiver of another device may be configured to support alternate, or additional, wireless data communication protocols, including future standards or variations thereof.

In accordance with various embodiments, the device 1301 may be a BS such as but not limited to, an eNB, a serving eNB, a target eNB, a femto station, or a pico station, for example. The device 1301 can be an RN, a DeNB, or a gNB. In some embodiments, the device 1301 may be a UE embodied in various types of user devices such as a mobile phone, a smart phone, a personal digital assistant (PDA), tablet, laptop computer, wearable computing device, etc. The processor modules 1314 and 1336 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the method or algorithm disclosed herein can be embodied directly in hardware, in firmware, in a software module executed by processor modules 1314 and 1336, respectively, or in any practical combination thereof. The memory modules 1316 and 1334 may be realized as RAM memory, flash memory, ROM memory, EPROM memory, EEPROM memory, registers, a hard disk, a removable disk, a CD-ROM, or any other form of storage medium known in the art. In this regard, memory modules 1316 and 1334 may be coupled to the processor modules 1314 and 1336, respectively, such that the processors modules 1314 and 1336 can read information from, and write information to, memory modules 1316 and 1334, respectively. The memory modules 1316 and 1334 may also be integrated into their respective processor modules 1314 and 1336. In some embodiments, the memory modules 1316 and 1334 may each include a cache memory for storing temporary variables or other intermediate information during execution of instructions to be executed by processor modules 1314 and 1336, respectively. Memory modules 1316 and 1334 may also each include non-volatile memory for storing instructions to be executed by the processor modules 1314 and 1336, respectively.

The network communication module 1318 generally represents the hardware, software, firmware, processing logic, and/or other components of the LMF 1302 that enable bidirectional communication between the transceiver 1310 and other network components and communication nodes in communication with the LMF 1302. For example, the network communication module 1318 may be configured to support internet or WiMAX traffic. In a deployment, without limitation, the network communication module 1318 provides an 502.3 Ethernet interface such that the transceiver 1310 can communicate with a conventional Ethernet based computer network. In this manner, the network communication module 1318 may include a physical interface for connection to the computer network (e.g., Mobile Switching Center (MSC)). In some embodiments, the network communication module 1318 includes a fiber transport connection configured to connect the LMF 1302 to a core network. The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A wireless communication method, comprising:
sending, by a wireless communication node (1020) to a wireless communication device (1010), a message requesting the wireless communication device (1010) to transmit a measurement report for positioning, and
indicating, by the wireless communication node (1020) to the wireless communication device (1010), one or more positioning methods to be associated with one of a plurality of measurement instances in the measurement report,
wherein the measurement report includes the plurality of measurement instances, each of which is associated with a respective time stamp and includes one or more time-domain occasions, wherein each time-domain occasion corresponds to when the wireless communication device (1010) receives an instance of a reference signal resource set.

2. The wireless communication method of claim 1, wherein the time stamp is indicated by a first time stamp that corresponds to a reception time of a first reference signal for determining one of the measurement instances and a second time stamp that corresponds to a reception time of a last reference signal for determining the measurement instance.

3. The wireless communication method of claim 1, wherein the time stamp is indicated by a first time stamp that corresponds to a reception time of a first reference signal for determining one of the measurement instances and a duration for determining the measurement instance.

4. The wireless communication method of claim 1, further comprising:
determining, by the wireless communication node (1020), a number of the one or more time-domain occasions based on a single resource set; or
determining, by the wireless communication node (1020), a number of the measurement instances based on a single resource set; or
determining, by the wireless communication node (1020), a number of the one or more time-domain occasions based on a single transmission reception point, TRP; or
determining, by the wireless communication node (1020), a number of the measurement instances based on a single TRP; or
determining, by the wireless communication node (1020), a number of the one or more time-domain occasions based on a single positioning frequency layer; or
determining, by the wireless communication node (1020), a number of the measurement instances based on a single positioning frequency layer.

5. The wireless communication method of claim 1, further comprising:
indicating, by the wireless communication node (1020), a plurality of reference signals to be included in the measurement report;
wherein each of the indicated reference signals is indicated through at least one of a TRP identifier, ID, a resource set ID, or a resource ID; and
wherein each of the indicated reference signals is associated with a respective subset of the plurality of measurement instances.

6. The wireless communication method of claim 5, wherein each of the measurement instances further includes one or more measurement values of the same measurement type or different measurement types.

7. The wireless communication method of claim 1, further comprising:
indicating, by the wireless communication node (1020), a plurality of measurement elements to be included in the measurement report;
wherein each of the indicated measurement elements is indicated through a TRP ID; and
wherein each of the indicated measurement elements is associated with a respective subset of the plurality of measurement instances.

8. The wireless communication method of claim 7, wherein each of the measurement instances further includes one or more measurement values of the same measurement type or different measurement types, and wherein each measurement value is associated with reference signal information for determining the measurement value.

9. The wireless communication method of claim 1, further comprising:
indicating, by the wireless communication node (1020), one or more positioning methods to be associated with one of the measurement instances in the measurement report;
wherein each positioning method includes one or more measurement elements;
wherein each measurement element is indicated through a TRP ID;
wherein each measurement element further includes one or more measurement values of the same measurement type or different measurement types; and
wherein each measurement value is associated with reference signal information for determining the measurement value.

10. The wireless communication method of claim 1, further comprising:
indicating, by the wireless communication node (1020), one or more measurement elements to be associated with one of the measurement instances in the measurement report;
wherein each measurement element is indicated through a TRP ID;
wherein each measurement element further includes one or more measurement values of the same measurement type or different measurement types; and
wherein each measurement value is associated with reference signal information for determining the measurement value.

11. The wireless communication method of claim 1, wherein the measurement report includes at least one of: a TRP ID, a resource set ID, a resource ID, or a measurement instance ID for determining a reference timing of a downlink reference signal time difference (DL RSTD) value.

12. A wireless communication node (1020), comprising:
at least one processor configured to:
send, via a transmitter to a wireless communication device (1010), a message requesting the wireless communication device (1010) to transmit a measurement report for positioning
indicate, via the transmitter to the wireless communication device (1010), one or more positioning methods to be associated with one of a plurality of measurement instances in the measurement report,
wherein the measurement report includes the plurality of measurement instances, each of which is associated with a respective time stamp and includes one or more time-domain occasions, wherein each time-domain occasion corresponds to when the wireless communication device (1010) receives an instance of a reference signal resource set.

13. A wireless communication method, comprising:
sending, by a wireless communication device (1010) to a wireless communication node (1020), a measurement report for positioning, and
receiving, by the wireless communication device (1010) from the wireless communication node (1020), an indication of one or more positioning methods to be associated with one of a plurality of measurement instances in the measurement report,
wherein the measurement report includes the plurality of measurement instances, each of which is associated with a respective time stamp and includes one or more time-domain occasions, wherein each time-domain occasion corresponds to when the wireless communication device (1010) receives an instance of a reference signal resource set.

14. A wireless communication device (1010), comprising:
at least one processor configured to:
send, via a transceiver to a wireless communication node (1020), a measurement report for positioning, and
receive, via the transceiver from the wireless communication node (1020), an indication of one or more positioning methods to be associated with one of a plurality of measurement instances in the measurement report,
wherein the measurement report includes the plurality of measurement instances, each of which is associated with a respective time stamp and includes one or more time-domain occasions, wherein each time-domain occasion corresponds to when the wireless communication device (1010) receives an instance of a reference signal resource set.

## Patentansprüche

1. Drahtloses Kommunikationsverfahren, aufweisend:
Senden, durch einen drahtlosen Kommunikationsknoten (1020) an eine drahtlose Kommunikationsvorrichtung (1010), einer Nachricht, die die drahtlose Kommunikationsvorrichtung (1010) auffordert, einen Messbericht zur Positionsbestimmung zu übertragen, und
Indizieren, durch den drahtlosen Kommunikationsknoten (1020) an die drahtlose Kommunikationsvorrichtung (1010), eines oder mehrerer Positionierungsverfahren, die einer von mehreren Messinstanzen in dem Messbericht zuzuordnen sind,
wobei der Messbericht die mehreren Messinstanzen umfasst, von denen jede einem jeweiligen Zeitstempel zugeordnet ist und eine oder mehrere Zeitbereichsgelegenheiten umfasst, wobei jede Zeitbereichsgelegenheit dem Zeitpunkt entspricht, zu dem die drahtlose Kommunikationsvorrichtung (1010) eine Instanz eines Referenzsignalressourcensatzes empfängt.

2. Drahtloses Kommunikationsverfahren nach Anspruch 1, wobei der Zeitstempel durch einen ersten Zeitstempel, der einer Empfangszeit eines ersten Referenzsignals zum Bestimmen einer der Messinstanzen entspricht, und einen zweiten Zeitstempel, der einer Empfangszeit eines letzten Referenzsignals zum Bestimmen der Messinstanz entspricht, indiziert wird.

3. Drahtloses Kommunikationsverfahren nach Anspruch 1, wobei der Zeitstempel durch einen ersten Zeitstempel indiziert wird, der einer Empfangszeit eines ersten Referenzsignals zum Bestimmen einer der Messinstanzen und einer Dauer zum Bestimmen der Messinstanz entspricht.

4. Drahtloses Kommunikationsverfahren nach Anspruch 1, ferner aufweisend:
Bestimmen, durch den drahtlosen Kommunikationsknoten (1020), einer Anzahl der einen oder mehreren Zeitbereichsgelegenheiten basierend auf einem einzigen Ressourcensatz; oder
Bestimmen, durch den drahtlosen Kommunikationsknoten (1020), einer Anzahl der Messinstanzen basierend auf einem einzigen Ressourcensatz; oder
Bestimmen, durch den drahtlosen Kommunikationsknoten (1020), einer Anzahl der einen oder mehreren Zeitbereichsgelegenheiten basierend auf einem einzigen Übertragungsempfangspunkt, TRP; oder
Bestimmen, durch den drahtlosen Kommunikationsknoten (1020), einer Anzahl der Messinstanzen basierend auf einem einzigen TRP; oder
Bestimmen, durch den drahtlosen Kommunikationsknoten (1020), einer Anzahl der einen oder mehreren Zeitbereichsgelegenheiten basierend auf einer einzigen Positionierungsfrequenzschicht; oder
Bestimmen, durch den drahtlosen Kommunikationsknoten (1020), einer Anzahl der Messinstanzen basierend auf einer einzigen Positionierungsfrequenzschicht.

5. Drahtloses Kommunikationsverfahren nach Anspruch 1, ferner aufweisend:
Indizieren, durch den drahtlosen Kommunikationsknoten (1020), von mehreren Referenzsignalen, die in dem Messbericht einzuschließen sind;
wobei jedes der indizierten Referenzsignale durch mindestens eine von einer TRP-Kennung, ID, einer Ressourcensatz-ID oder einer Ressourcen-ID indiziert wird; und
wobei jedes der indizierten Referenzsignale einem jeweiligen Teilsatz der mehreren Messinstanzen zugeordnet ist.

6. Drahtloses Kommunikationsverfahren nach Anspruch 5, wobei jede der Messinstanzen ferner einen oder mehrere Messwerte desselben Messtyps oder unterschiedlicher Messtypen umfasst.

7. Drahtloses Kommunikationsverfahren nach Anspruch 1, ferner aufweisend:
Indizieren, durch den drahtlosen Kommunikationsknoten (1020), von mehreren Messelementen, die in den Messbericht einzuschließen sind;
wobei jedes der indizierten Messelemente durch eine TRP-ID indiziert wird; und
wobei jedes der indizierten Messelemente einem jeweiligen Teilsatz der mehreren Messinstanzen zugeordnet ist.

8. Drahtloses Kommunikationsverfahren nach Anspruch 7, wobei jede der Messinstanzen ferner einen oder mehrere Messwerte desselben Messtyps oder unterschiedlicher Messtypen umfasst, und wobei jeder Messwert Referenzsignalinformationen zum Bestimmen des Messwerts zugeordnet ist.

9. Drahtloses Kommunikationsverfahren nach Anspruch 1, ferner aufweisend:
Indizieren, durch den drahtlosen Kommunikationsknoten (1020), eines oder mehrerer Positionierungsverfahren, die einer der Messinstanzen in dem Messbericht zuzuordnen sind;
wobei jedes Positionierungsverfahren ein oder mehrere Messelemente umfasst;
wobei jedes Messelement durch eine TRP-ID indiziert wird;
wobei jedes Messelement ferner einen oder mehrere Messwerte desselben Messtyps oder unterschiedlicher Messtypen umfasst; und
wobei jeder Messwert Referenzsignalinformationen zum Bestimmen des Messwerts zugeordnet ist.

10. Drahtloses Kommunikationsverfahren nach Anspruch 1, ferner aufweisend:
Indizieren, durch den drahtlosen Kommunikationsknoten (1020), eines oder mehrerer Messelemente, die einer der Messinstanzen in dem Messbericht zuzuordnen sind;
wobei jedes Messelement durch eine TRP-ID indiziert wird;
wobei jedes Messelement ferner einen oder mehrere Messwerte desselben Messtyps oder unterschiedlicher Messtypen umfasst; und
wobei jeder Messwert Referenzsignalinformationen zum Bestimmen des Messwerts zugeordnet ist.

11. Drahtloses Kommunikationsverfahren nach Anspruch 1, wobei der Messbericht mindestens eine umfasstvon: einer TRP-ID, einer Ressourcensatz-ID, einer Ressourcen-ID oder einer Messinstanz-ID zum Bestimmen eines Referenz-Timings eines Downlink-Referenzsignalzeitdifferenzwerts (DL-RSTD-Werts).

12. Drahtloser Kommunikationsknoten (1020), aufweisend:
mindestens einen Prozessor, der konfiguriert ist zum:
Senden, über einen Sender an eine drahtlose Kommunikationsvorrichtung (1010), einer Nachricht, die die drahtlose Kommunikationsvorrichtung (1010) auffordert, einen Messbericht zur Positionsbestimmung zu übertragen,
Indizieren, über den Sender an die drahtlose Kommunikationsvorrichtung (1010), eines oder mehrerer Positionierungsverfahren, die einer von mehreren Messinstanzen in dem Messbericht zuzuordnen sind,
wobei der Messbericht die mehreren Messinstanzen umfasst, von denen jede einem jeweiligen Zeitstempel zugeordnet ist und eine oder mehrere Zeitbereichsgelegenheiten umfasst, wobei jede Zeitbereichsgelegenheit dem Zeitpunkt entspricht, zu dem die drahtlose Kommunikationsvorrichtung (1010) eine Instanz eines Referenzsignalressourcensatzes empfängt.

13. Drahtloses Kommunikationsverfahren, aufweisend:
Senden, durch eine drahtlose Kommunikationsvorrichtung (1010) an einen drahtlosen Kommunikationsknoten (1020), eines Messberichts zur Positionsbestimmung, und
Empfangen, durch die drahtlose Kommunikationsvorrichtung (1010) von dem drahtlosen Kommunikationsknoten (1020), einer indikation eines oder mehrerer Positionierungsverfahren, die einer von mehreren Messinstanzen in dem Messbericht zuzuordnen sind,
wobei der Messbericht die mehreren Messinstanzen umfasst, von denen jede einem jeweiligen Zeitstempel zugeordnet ist und eine oder mehrere Zeitbereichsgelegenheiten umfasst, wobei jede Zeitbereichsgelegenheit dem Zeitpunkt entspricht, zu dem die drahtlose Kommunikationsvorrichtung (1010) eine Instanz eines Referenzsignalressourcensatzes empfängt.

14. Drahtlose Kommunikationsvorrichtung (1010), aufweisend:
mindestens einen Prozessor, der konfiguriert ist zum:
Senden, über einen Transceiver an einen drahtlosen Kommunikationsknoten (1020), eines Messberichts zur Positionsbestimmung, und
Empfangen, über den Transceiver von dem drahtlosen Kommunikationsknoten (1020), einer Indikation eines oder mehrerer Positionierungsverfahren, die einer von mehreren Messinstanzen in dem Messbericht zuzuordnen sind,
wobei der Messbericht die mehreren Messinstanzen umfasst, von denen jede einem jeweiligen Zeitstempel zugeordnet ist und eine oder mehrere Zeitbereichsgelegenheiten umfasst, wobei jede Zeitbereichsgelegenheit dem Zeitpunkt entspricht, zu dem die drahtlose Kommunikationsvorrichtung (1010) eine Instanz eines Referenzsignalressourcensatzes empfängt.

## Revendications

1. Procédé de communication sans fil, comprenant :
l'envoi, par un nœud de communication sans fil (1020) à un dispositif de communication sans fil (1010), d'un message demandant au dispositif de communication sans fil (1010) de transmettre un rapport de mesure pour un positionnement, et
l'indication, par le nœud de communication sans fil (1020) au dispositif de communication sans fil (1010), d'un ou de plusieurs procédés de positionnement à associer à l'une d'une pluralité d'instances de mesure dans le rapport de mesure,
dans lequel le rapport de mesure comporte la pluralité d'instances de mesure, dont chacune est associée à un horodatage respectif et comporte une ou plusieurs occasions de domaine temporel, dans lequel chaque occasion de domaine temporel correspond au moment où le dispositif de communication sans fil (1010) reçoit une instance d'un ensemble de ressources de signal de référence.

2. Procédé de communication sans fil selon la revendication 1, dans lequel l'horodatage est indiqué par un premier horodatage qui correspond à un instant de réception d'un premier signal de référence pour déterminer l'une des instances de mesure et un second horodatage qui correspond à un instant de réception d'un dernier signal de référence pour déterminer l'instance de mesure.

3. Procédé de communication sans fil selon la revendication 1, dans lequel l'horodatage est indiqué par un premier horodatage qui correspond à un instant de réception d'un premier signal de référence pour déterminer l'une parmi des instances de mesure et une durée pour déterminer l'instance de mesure.

4. Procédé de communication sans fil selon la revendication 1, comprenant en outre :
la détermination, par le nœud de communication sans fil (1020), d'un nombre de la ou des occasions de domaine temporel sur la base d'un ensemble de ressources unique ; ou
la détermination, par le nœud de communication sans fil (1020), d'un nombre des instances de mesure sur la base d'un ensemble de ressources unique ; ou
la détermination, par le nœud de communication sans fil (1020), d'un nombre de la ou des occasions de domaine temporel sur la base d'un point d'émission-réception, TRP, unique ; ou
la détermination, par le nœud de communication sans fil (1020), d'un nombre des instances de mesure sur la base d'un TRP unique ; ou
la détermination, par le nœud de communication sans fil (1020), d'un nombre de la ou des occasions de domaine temporel sur la base d'une couche de fréquence de positionnement unique ; ou
la détermination, par le nœud de communication sans fil (1020), d'un nombre des instances de mesure sur la base d'une couche de fréquence de positionnement unique.

5. Procédé de communication sans fil selon la revendication 1, comprenant en outre :
l'indication, par le nœud de communication sans fil (1020), d'une pluralité de signaux de référence à inclure dans le rapport de mesure ;
dans lequel chacun des signaux de référence indiqués est indiqué par au moins l'un parmi un identifiant, ID, de TRP, un ID d'ensemble de ressources ou un ID de ressource ; et
dans lequel chacun des signaux de référence indiqués est associé à un sous-ensemble respectif de la pluralité d'instances de mesure.

6. Procédé de communication sans fil selon la revendication 5, dans lequel chacune des instances de mesure comporte en outre une ou plusieurs valeurs de mesure du même type de mesure ou de différents types de mesure.

7. Procédé de communication sans fil selon la revendication 1, comprenant en outre :
l'indication, par le nœud de communication sans fil (1020), d'une pluralité d'éléments de mesure à inclure dans le rapport de mesure ;
dans lequel chacun des éléments de mesure indiqués est indiqué par un ID de TRP ; et
dans lequel chacun des éléments de mesure indiqués est associé à un sous-ensemble respectif de la pluralité d'instances de mesure.

8. Procédé de communication sans fil selon la revendication 7, dans lequel chacune des instances de mesure comporte en outre une ou plusieurs valeurs de mesure du même type de mesure ou de types de mesure différents, et dans lequel chaque valeur de mesure est associée à des informations de signal de référence pour déterminer la valeur de mesure.

9. Procédé de communication sans fil selon la revendication 1, comprenant en outre :
l'indication, par le nœud de communication sans fil (1020), d'un ou de plusieurs procédés de positionnement à associer à l'une des instances de mesure dans le rapport de mesure ;
dans lequel chaque procédé de positionnement comporte un ou plusieurs éléments de mesure ;
dans lequel chaque élément de mesure est indiqué par un ID de TRP ;
dans lequel chaque élément de mesure comporte en outre une ou plusieurs valeurs de mesure du même type de mesure ou de types de mesure différents ; et
dans lequel chaque valeur de mesure est associée à des informations de signal de référence pour déterminer la valeur de mesure.

10. Procédé de communication sans fil selon la revendication 1, comprenant en outre :
l'indication, par le nœud de communication sans fil (1020), d'un ou de plusieurs éléments de mesure à associer à l'une des instances de mesure dans le rapport de mesure ;
dans lequel chaque élément de mesure est indiqué par un ID de TRP ;
dans lequel chaque élément de mesure comporte en outre une ou plusieurs valeurs de mesure du même type de mesure ou de types de mesure différents ; et
dans lequel chaque valeur de mesure est associée à des informations de signal de référence pour déterminer la valeur de mesure.

11. Procédé de communication sans fil selon la revendication 1, dans lequel le rapport de mesure comporte au moins l'un parmi : un ID de TRP, un ID d'ensemble de ressources, un ID de ressource ou un ID d'instance de mesure pour déterminer une synchronisation de référence d'une valeur de différence de temps de signal de référence de liaison descendante (DL RSTD).

12. Nœud de communication sans fil (1020), comprenant :
au moins un processeur configuré pour :
envoyer, par l'intermédiaire d'un émetteur à un dispositif de communication sans fil (1010), un message demandant au dispositif de communication sans fil (1010) de transmettre un rapport de mesure pour un positionnement,
indiquer, par l'intermédiaire de l'émetteur au dispositif de communication sans fil (1010), un ou plusieurs procédés de positionnement à associer à l'une d'une pluralité d'instances de mesure dans le rapport de mesure,
dans lequel le rapport de mesure comporte la pluralité d'instances de mesure, dont chacune est associée à un horodatage respectif et comporte une ou plusieurs occasions de domaine temporel, dans lequel chaque occasion de domaine temporel correspond au moment où le dispositif de communication sans fil (1010) reçoit une instance d'un ensemble de ressources de signal de référence.

13. Procédé de communication sans fil, comprenant :
l'envoi, par un dispositif de communication sans fil (1010) à un nœud de communication sans fil (1020), d'un rapport de mesure pour un positionnement, et
la réception, par le dispositif de communication sans fil (1010) en provenance du nœud de communication sans fil (1020), d'une indication d'un ou de plusieurs procédés de positionnement à associer à l'une d'une pluralité d'instances de mesure dans le rapport de mesure,
dans lequel le rapport de mesure comporte la pluralité d'instances de mesure, dont chacune est associée à un horodatage respectif et comporte une ou plusieurs occasions de domaine temporel, dans lequel chaque occasion de domaine temporel correspond au moment où le dispositif de communication sans fil (1010) reçoit une instance d'un ensemble de ressources de signal de référence.

14. Dispositif de communication sans fil (1010), comprenant :
au moins un processeur configuré pour :
envoyer, par l'intermédiaire d'un émetteur-récepteur à un nœud de communication sans fil (1020), un rapport de mesure pour un positionnement, et
recevoir, par l'intermédiaire de l'émetteur-récepteur en provenance du nœud de communication sans fil (1020), une indication d'un ou de plusieurs procédés de positionnement à associer à l'une d'une pluralité d'instances de mesure dans le rapport de mesure,
dans lequel le rapport de mesure comporte la pluralité d'instances de mesure, dont chacune est associée à un horodatage respectif et comporte une ou plusieurs occasions de domaine temporel, dans lequel chaque occasion de domaine temporel correspond au moment où le dispositif de communication sans fil (1010) reçoit une instance d'un ensemble de ressources de signal de référence.
